(19) Europäisches Patentamt
European Patent Office
Office européen des brevets

(11) **EP 3 032 493 A1**

(12) **EUROPEAN PATENT APPLICATION**

(43) Date of publication:
**15.06.2016 Bulletin 2016/24**

(51) Int Cl.:
***G06T 5/00*** (2006.01)          ***G06T 5/20*** (2006.01)

(21) Application number: **14197321.4**

(22) Date of filing: **11.12.2014**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **TP Vision Holding B.V.**
**1097 JB Amsterdam (NL)**

(72) Inventors:
• **Mainali, Pradip**
  **B-9052 Ghent (BE)**
• **Wittebrood, Rimmert Bart**
  **B-9052 Ghent (BE)**

(74) Representative: **DREISS Patentanwälte PartG mbB**
**Postfach 10 37 62**
**70032 Stuttgart (DE)**

(54) **Method and apparatus for image enhancement**

(57)     The invention relates to a method and apparatus to restore an image from its degraded form. The invention further relates to an offline training process and online image restoring process used in this method and apparatus. In the offline stage a data base with pairs of training image and corresponding degraded training image is used to generate feature vectors representing various local characteristics of pixels. The feature vectors are clustered so as to determine a dictionary of pixel classes having representative feature vectors. Later, for each pixel class sets of coefficients of restoring filters are optimized using the training images in the data base.

In the image restoring process feature vectors for a plurality of pixels of the degraded image are determined (S11). For each of the degraded pixels a near matching pixel class is determined (S12), which having a representative feature vector which is close to the feature vector of the corresponding degraded pixel. The degraded pixels are filtered with a restoring filter which set with filter coefficients belonging to the near matching pixel class (S13), so as to restore the degraded image.

The method and apparatus are applicable in many applications e.g. camera, HD/UHD TV, document scanning systems etc. to restore the sharpness of an image.

Fig. 5

**Description**

FIELD OF THE INVENTION

The present invention relates to a method for enhancing a degraded image and a training process and an image restoring process for use in the method.

The invention further relates to an image processor and consumer device and TV apparatus provided with the image processor.

Finally the invention relates to program products with program code to perform the training process and image restoring process, respectively, when loaded in a programmable device.

BACKGROUND OF THE INVENTION

Image enhancement methods are often used to restore blurred images by means sharpness restoration algorithms. Several sharpness algorithms were developed. The very first approach includes such as adding linear unsharp mask which makes the edge profiles steeper. Though these methods are simple and works well in many applications, they lack to enhance the fine details and amplify noise. The methods based on blind-deconvolution are sparse priors estimating PSF using edge profiles, regularizing wavelet coefficients, shape adaptive DCT, BM3D etc. However, these methods require iteration and hence they are complex for a real time application. Other methods are based on machine learning. These methods include learning sharpness parameter according to human preferences and pixel classification.

US Patent 6,192,161 discloses a method based on pixel classification. In this method first pixel classes are determined for pixels of the degraded image. The restoration of the image is done by filtering the pixels of the degraded image with filter coefficients, whereby the pixel class dependent filter coefficients are selected from a dictionary. For the determination of the class of a pixel, the pixels within an aperture comprising the pixel itself and neighboring pixels are used. If the pixel value is above the average value of the pixels in the aperture, then the pixel is binary coded as "1" otherwise "0". The binary values of the pixels within the aperture form a code for selecting the filter coefficients from the dictionary.

SUMMARY OF THE INVENTION

It is an object of the invention to provide a method and apparatus for restoration of degraded images with improved image restoration capability.

According to a first aspect of the invention this is achieved by a method for enhancing a degraded image, said method comprising a training process for determining pixel classes and corresponding filter characteristics on the basis of a plurality of pairs of training image and corresponding degraded training image and an image restoring process for creating a restored image by filtering the degraded image using results of the training process, whereby said training process comprises: deriving for each of a plurality of individual pixels of the degraded training images a corresponding feature vector, representing local characteristics of the individual pixel, from pixels within an aperture comprising the individual pixel and neighbouring pixels, defining pixel classes by clustering feature vectors having similar characteristics, for each pixel class a representative feature vector being assigned, determining for each pixel class filter characteristics of a filter for restoring pixels of the training images when applied to the pixels of the corresponding degraded training images and whereby said image restoring process comprising: determining feature vectors for a plurality of pixels of the degraded image, determining for each of the degraded pixels a near matching pixel class, having a representative feature vector which is close to the feature vector determined for the corresponding degraded pixel and restoring pixels of the image by applying filters to the degraded pixels, which filters have the filter characteristics belonging to the near matching pixel classes determined for the degraded pixels.

The method according to the invention enables to determine from the image database the optimal number of pixel classes and the dictionary/codebook of pixel features representing these pixel classes.

The class decision boundaries are adapted according a chosen number of pixel classes. This all makes the method truly optimally locally content/data adaptive.

In an embodiment of the method each of a set of training images have two or more corresponding degraded training images with different degradation levels, whereby in the training process sets of filter coefficients are determined for different degradation levels and whereby in the restoring process a degradation level of the degraded image is determined and the set of filter coefficients for the restoring of the image is selected in dependence on the determined degradation level of the degraded image.

The amount of degradation that can be restored from the image depends on the aperture size that is used for the pixel classification and filtering as well. By making the filter coefficients dependent from the level of degradation good restoration results are obtained for a large range of degradation levels.

In an embodiment of the method, in the restoring process, for each of the plurality of degraded pixels M nearest matching pixel classes are determined, M being an integer equal or greater than 2, wherein the pixels of the degraded image are filtered with M filters having the sets of coefficients belonging to the determined M nearest matching pixel classes and wherein the restored image is derived from a combination of outputs of the M filters.

This results in an even more accurate restoration, in particular when there is no clear best match of the feature vector of the pixel of the degraded and the feature vectors of the pixel classes.

According to another aspect of the invention an image processor for deriving a restored image from a degraded image, which processor is arranged to derive a first feature vector from an aperture of a pixel of the degraded image and a plurality of its neighbouring pixels, and to compare the determined feature vector with a set of predefined feature vectors and to apply to the pixel a predefined filter with filter characteristic belonging to a feature vector of the set of predetermined feature vectors which has a near match with the first feature vector.

Such image processor needs limited processing time for restoration,

BRIEF DESCRIPTION OF THE DRAWINGS

Further embodiments of the device according to the invention and the advantages thereof will be apparent from and elucidated further with reference to the accompanying drawings, in which

Fig. 1 shows a sequence of process steps which are performed in the training process;
Fig. 2a shows an example of an image consisting of a matrix of pixels and a feature vector for one of the pixels of the image,
Fig. 2b shows a feature matrix comprising features vectors $f_0$, $\cdots$, $f_N$ for all the pixels of degraded training images,
Fig. 3 shows the compactness of the feature clusters for different cluster counts,
Fig. 4 shows schematically the image restoring process,
Fig. 5 shows an embodiment of an image processor according to the invention, and
Fig. 6 shows an embodiment of a TV apparatus provided with the image processor.

DETAILED DESCRIPTION OF EMBODIMENTS

The following description focusses mainly on embodiments of the invention applied for sharpness enhancement. However, it must be appreciated that the invention is not limited to sharpness enhancement alone, but extends to other types of restorations, where the restoration can be done on the basis of local characteristics, e.g. noise reduction, compression artefact (block and mosquito noise) reduction, frame rate conversion, de-interlacing, resolution scaling etc.

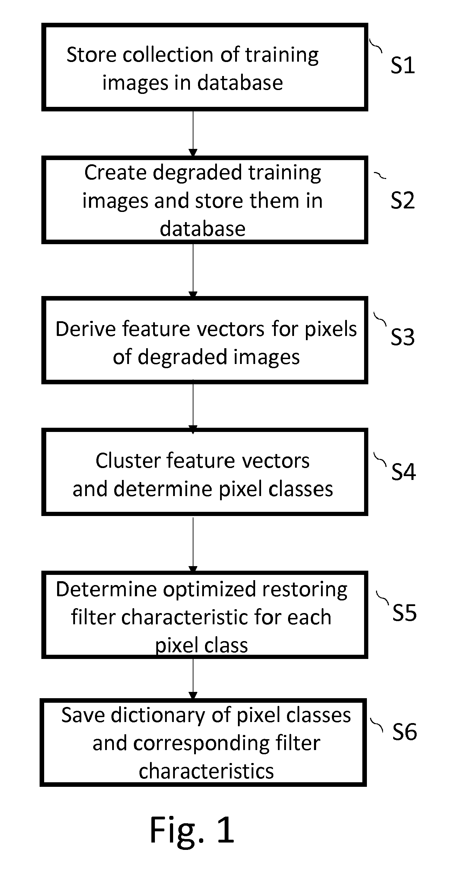

The method according to the invention comprises a training process and an image restoring process. Fig. 1 shows a sequence of process steps which are performed in the training process. In step S1 a collection of representative images is stored in a data base. The collection of the images comprise images with various scene types including indoor, outdoor, nature, buildings, dark/bright images etc.

In step S2 the quality of the training images is degraded by performing a suitable degrading process on the training images. Pairs of training image and corresponding degraded image are stored in the data base. The degradation that is applied during the training stage is the inverse of the desired enhancement in the image restoring process. In the example described in this application the degradation is blur, but the invention can also be used for other types of degradation, such as for example e.g. noise, compression artefact (block and mosquito noise), frame rate reduction, interlacing, resolution conversion etc. Degraded images comprising blur can be derived by performing, for example, a Gaussian convolution of the training images with a blur kernel. This blurring method is for example described in detail in J.R. Price, T.F. Gee, and K.W. Tobin, "Blur estimation in limited-control environments," in IEEE International Conference on Acoustics, Speech, and Signal Processing, 2001, 2001, vol. 3, pp. 1669-1672 vol.3.

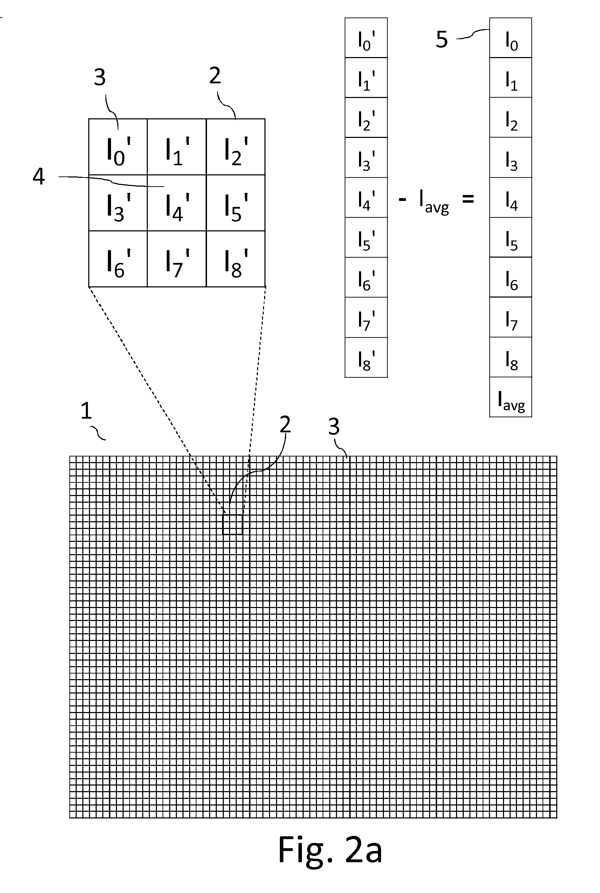

In step S3 feature vectors are derived for the pixel of the degraded training images in the data base. These feature vectors represent different local characteristics for pixels of the degraded training images. Such a local characteristic is based on a group of neighbouring pixels in an aperture of the image. An example of such local characteristic is illustrated with reference to Fig. 2a. Fig. 2a shows an example of an image 1 consisting of a matrix of pixels 3, each being an intensity value I'. A group of 9 adjacent pixels within an aperture 2 of a size of 3x3 pixels is shown in enlarged form. The local characteristic of a pixel 4 in the centre of the aperture 2 is represented by the intensity values $I_0'$,..., $I_8'$ representing the brightness of the 9 pixels in the aperture 2.

In general, to extract the pixel feature, the pixels in the aperture of size n x n centred at the pixel are arranged lexicographically as the column vectors $X \in \Re^{(nxn)}$.

The dynamic information is computed in accordance with Equation 1 by subtracting the average value of the intensity values from each pixel in the aperture.

$$f = X - I_{avg} \qquad (1)$$

Where $I_{avg}$ is the average value of the pixels within the aperture. After many experiments it appeared that this type of feature pixel feature works best for sharpness enhancement as compared to other features such as using pixel values, entropy etc.

The feature vector captures varying (i.e. ac) and fixed (i.e. dc) part of the pixel. For sharpness enhancement, the varying part needs to be modified and hence it was found that this type of feature works well for the sharpness enhancement.

Further it is beneficial to add one or more components to the feature vector comprising statistical information, e.g. a variance of the pixel values and/or local frequency information such as derivative information. Depending on the application and the corruption in the image that needs to be removed, by adding these new information in the feature vector, more clear distinction between noise/artefacts and image details or image structure can be made for better artefact filtering.

In Fig 2a a feature vector f of length 10, indicated with reference sign 5, is shown with values $I_0$,......, $I_8$, $I_{avg}$, which are derived from the intensity values $I_0$',..., $I_8$' the 9 pixels in the aperture 2 with a 3X3 size.

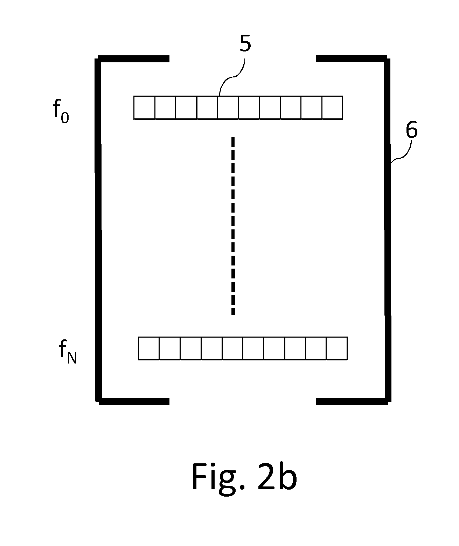

The features vectors $f_0$, ⋯, $f_N$ for all the pixels of all degraded training images in the database are extracted and collected in each row of a feature matrix 6 shown in Fig. 2b , where N is the total number of pixels in the database, which can be hundreds of million pixels for representative collection of training images. To classify the pixel based on their local characteristics, the image pixels within an aperture of size nxn (e.g. 3 x 3) are used. To represent every local structure uniquely, many pixel classes are required. In theory, the class number can be huge. For example, for 3 x 3 aperture size and with the pixels that are valued between 0 and 255, we need $255^9$ classes. However, in practice these many number of pixel classes are not needed as they can be quantized/compressed into fewer pixel classes. This is true as the classes that are separated with the class distance below noise margin are not useful. Moreover, it is difficult to define how these local characteristics of the pixel classes should be.

In step S4 of the training process (Fig. 1) the feature vectors in the matrix are clustered to find an optimal number of the pixel classes by applying a clustering algorithm to cluster the pixel feature vectors that are similar. Suitable clustering algorithms are for example k-means clustering algorithms and Expectation Maximization (EM) algorithms. A suitable k-means algorithm with the cluster centroid initialized is disclosed in David Arthur and Sergei Vassilvitskii, "K-means++: The advantages of careful seeding," in Proceedings of the Eighteenth Annual ACM-SIAM Symposium on Discrete Algorithms. 2007, pp. 1027-1035, Society for Industrial and Applied Mathematics.

The k-means clustering algorithm minimizes the average squared distance between the points in the same cluster. The algorithm begins with K arbitrary cluster centres selected from the feature matrix of all the pixels. Each pixel feature in the row is assigned to the nearest class, and the centroid of the class is updated as the centre mass of all the pixel features assigned to it. Once all the pixel features are clustered, the cluster centroids representing the local characteristic of the pixel is obtained. The quality of the cluster centroids are computed by cluster compactness. The compactness (Q) of the feature clusters is computed in accordance with Equation 2 as the total squared distance of all the pixel feature vectors $f_{i,c}$ in the feature matrix with the feature vector $C_c$ of their nearest cluster centroid:

$$Q = \sum_{i=0}^{N} \| f_{i,c} - C_c \|^2 \qquad (2)$$

The compactness indicates the average squared error in finding the nearest matching pixel class in the dictionary. Since the quality of the cluster centroids computed by the algorithm depends on the starting class centres, the algorithm has been randomized by executing over 10 different trials. The result with the minimum compactness value is chosen as the final solution.

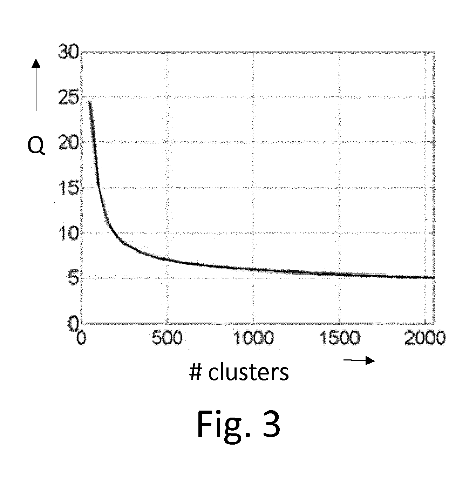

To find the optimal number of pixel classes, the variation of Q with respect to pixel class count is determined. Fig. 3 shows the compactness for a different cluster count computed using the feature matrix for a 3x3 pixel aperture. The graph shows that after some cluster count the error drops slowly and finally stabilizes around the noise margin, indicating that the noisy classes are added after certain threshold. A suitable number of pixel classes for the example of Fig 2 is 1024. The cluster centroids can be used for a dictionary of code words representing these K cluster centres. In the method described hereinbefore the optimal number of pixel classes from the image database itself, hence adapting the pixel classes locally optimal. For this, the pixel features from the hundreds of millions of the pixels are collected. The clustering algorithm is used to cluster together the similar pixel features. Hence, compact pixel classes are learned resulting in a very small errors while pixel classification.

Once the code words for the dictionary are determined, the next step S5 in the training process is determining for each pixel class the filter characteristics for restoring the pixels of the training images based on the pixels of the corresponding degraded training images The filter characteristics can be represented by a set of filter coefficients $w_c$ of a deconvolution filter, which can be represented for example by Equation 3.

$$I_{restored}(j) = \sum_{i=1}^{N^2} w_c(i) I_{degraded}(i,j)^2 \tag{3}$$

Next, the filter coefficients for the optimal filters are determined. To optimize the filter coefficients for each class c, the squared error between the source pixels and the degraded pixels belonging to class c is computed in accordance with Equation 4.

$$e_c^2 = \sum_{j=1}^{N_c} I_{source}(j,c) - \sum_{i \in (nxn)} (w_c(i) I_{degraded}(j,i,c))^2 \tag{4}$$

where $N_c$ represents the number of pixels that belongs to the class c. The degraded image is generated as: $I_{source} * G + n$, where $G$ is the Gaussian kernel and $n$ is an additive Gaussian noise. The optimal values for the filter coefficients for class $c$ is estimated by taking the first derivative of $e_c^2$ and evaluated as shown in Equation 5.

$$\frac{\partial e_c^2}{\partial w_c} = 0 \tag{5}$$

After simplification, the linear Equation 6 can be used to estimate the filter coefficients.

$$A_c W_c = b_c \tag{6}$$

where ,

$$A_c = \sum_{j=1}^{N_c} X_{dj} X_{dj}^T , b_c = \sum_{j=1}^{N_c} x_{sj} X_{dj}^T \tag{7}$$

where $X_{dj}$ is a lexicographically arranged pixel in the aperture as the column vector from the degraded image, x is the pixel in the source image and $N_c$ is the total number of pixels belonging to class $c$. The least square solution for the filter coefficients ($w_c$) is obtained by solving the Equation 6. The obtained sets of filter coefficients ($w_c$) are saved and used in the image restoring process. In the embodiment described in the preceding the filter characteristics are stored as a set of filter coefficients. However other methods for defining the filter characteristics can be used. The amount of blur that can be restored from the image depends on the aperture size that is used for the pixel classification and filtering as well. Experimentally, it has been found that for 3 x 3 aperture size, the algorithm is found to work well to restore the image blurred up to the Gaussian kernel of size of 11 x 11 pixels. This is due to the reason that if the blur level is much higher than the classification aperture, the ambiguity in the pixel classification is significantly high. Therefore, it is beneficial that the filter coefficients are optimized for two or more different Gaussian blur kernels. Very good results are achieved for when 5 different blur kernels are used, to with blur kernels with sizes: 3 x 3, 5 x 5, 7 x 7, 9 x 9 and 11 x 11 pixels. Hereinafter these blur levels will be referred to as blur level 1 to blur level 5. The filter coefficients optimized for different blur levels are used in the image restoring process.

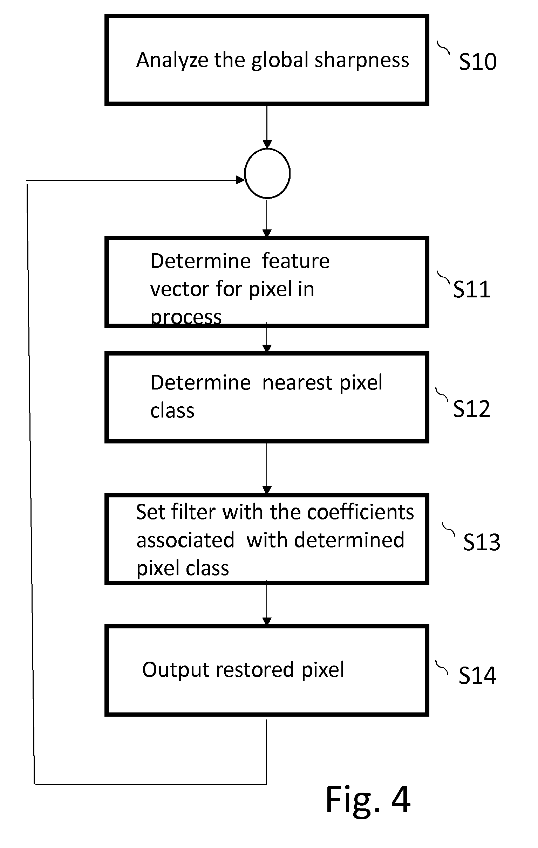

The dictionary of the pixel class and the optimized filter coefficients from the offline training stage are used in online filtering stage. Fig. 4 shows schematically the image restoring process. The first step S10 in this restoring process is the analyses of the global sharpness of the degraded image to be enhanced so as to determine the level of degradation, in this example the blur level. Instead of an automatic determination of the degradation level it is also possible that the degradation level is manually set by the user.

After the determination of the degradation level the process continues with a loop in which subsequent pixels of the degraded image are restored. This loop starts with step S11 wherein the feature vector for the pixel in process is determined. In step S12 from the determined dictionary the pixel class is selected which has the best match with the feature of the pixel in process. This is the pixel class with a feature vector which is closest to the feature vector of the pixel in process. The nearest matching pixel class in the dictionary is searched by computing the Euclidean distance in accordance with Equation 8.

$$ p_c = \sum_{i=0}^{10} \|f_{i,c-D_c}\|^2 \qquad\qquad (8) $$

where $D_c$ is the feature vector in the dictionary representing class c. The m nearest matching pixel classes and their corresponding class distance value $p_c$ are preserved. Then in step S13 the filter coefficients associated with this selected pixel class are read and the restoring filter is set with these filter coefficients. In step S14 the restored pixel created with the filter is outputted and the process is continued with the step S11 for the subsequent pixel.

In the image restoring process shown in Fig.4 only the nearest pixel class is determined for the restoration of a pixel. However more accurate restoration results can be achieved when the m nearest pixel classes are determined and restore the pixel on the basis of a weighted combination of outputs of m filters. The values of the weighting factors $p_0$, ..., $p_m$ are inversely proportional to the distance from the feature vector of the pixel class and the determined feature vector. The weighting factors are normalized $\sum_{j=1}^{m} p_j = 1$. The corresponding filters for the selected blur level are used to filter the pixel. The filtered results from the multiple class are combined by weighting filter results with their class distance in accordance with Equation 9:

$$ I_{sharp}(i) = \sum_{j=1}^{m} p_j \sum_{i \in (nxn)} w_c(i) I(i) \qquad\qquad (9) $$

Once all the pixels in the image are filtered, the restored (sharp) output image is available.

Summarized, the method for enhancing a degraded image according to the invention is based on pixel classification and filtering it with the optimized filter coefficients for the corresponding pixel class. In the training process the dictionary of pixel class representing different pixel local characteristic is determined using the huge number of training images in the database. The coefficients of the restoring filter are optimized for each pixel class using pairs of the training image and the corresponding degraded image in the database. The algorithm basically performs inverse filtering and the deconvolution is regularized during the training stage. Once the sets of filter coefficients for the pixel classes are determined, the image restoring process requires only classification of the pixel and applying the filters with the set of filter coefficients belonging to the corresponding pixel class. Hence, the most complex part of the algorithm pushed in the training process, thus making the image restoring process suitable for a real time application. The method is also truly locally content adaptive as compared to the state-of-art methods because the method according to the invention determines the pixel class from the training images in the training database.

The restoring process can easily be performed real-time as it only requires pixel classification and filtering with the optimized filter coefficients. The method is also capable to restore and enhance the fine details, for example grass, in the image very well. For example, fine details in grass regions are enhanced well without introducing image artefacts. Flat regions such as sky and walls are enhanced well without amplifying the noise.

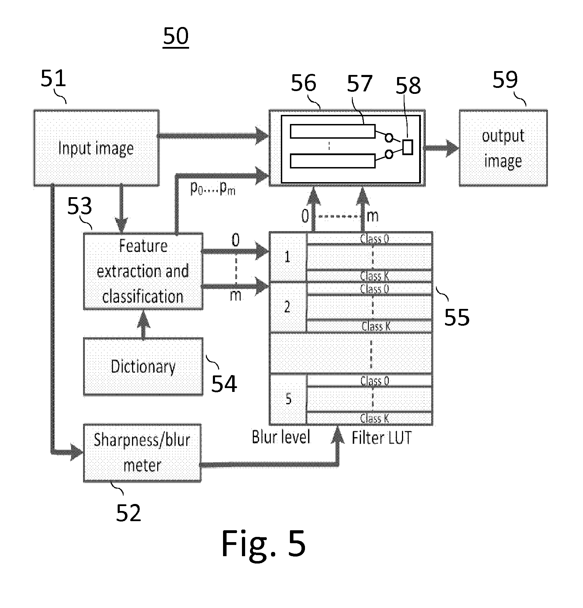

Fig. 5 shows an embodiment of an image processor 50 according to the invention. The image processor 50 comprises a front end part 51 for receiving a degraded input image. The front end part 51 is coupled to a degradation measurement part 52. The degradation measurement part 52, e.g. a sharpness/blur meter, determines the degradation level for the input image.

A feature extraction and classification part 53 is coupled to an output of the front end part 51 and a dictionary memory 54. The dictionary memory 54 comprises the feature vectors for a set of pixel classes. The feature extraction and classification part 53 receives pixels of the input image from the front end part 51, determines for each of the pixel the feature vector and compares this feature vector with the feature vectors of the pixel classes stored in the dictionary memory 54. The pixel classes with the m feature vectors which the best match with the determined feature vector are determined. The feature extraction and classification part is further arranged to determine the normalized weighting factors $p_0$, ..., $p_m$.

Inputs of a filter coefficient look up table 55 are coupled to outputs of the feature extraction and classification part 53 and to the output of the degradation measurement part 52. The filter coefficient look up table 55 comprises for a plurality of degradations levels, in this embodiment for 5 degradation levels, a set of filter coefficients for each of the pixel classes in the dictionary memory 54.

Based on the outputs of the feature extraction and classification part 53 and the degradation measurement part 52 the filter coefficients look up table 55 outputs the sets of filter coefficients corresponding with the information about the degradation level and pixel classes received on its inputs.

The outputs of the filter coefficient look up table 55 are coupled to a filter part 56 with a filter characteristic as laid down in Equation 9. To this end the filter part 56 comprising m restoration filters 57 which are set with the filter coefficients received from the filter coefficient look up table 55, The filter part 56 further comprises an adder 58 for adding the outputs of the filter, whereby the contribution of the outputs of the filter to the restored pixel is determined by weighting factors $p_0$, ...., $p_m$ which are set by the feature extraction part and classification part 53. The output of the filter part 56 is coupled to a back end part 59 which outputs an output image consisting of the restored pixels. It will be clear to the skilled man that the image processor according to the invention is not limited to the embodiment shown in Figure 5. For example it is possible to make use of a programmable device in which one or more functions of the processor are implemented by means of a program with program code which let the programmable device perform the functions when the program codesis executed by the programmable device.

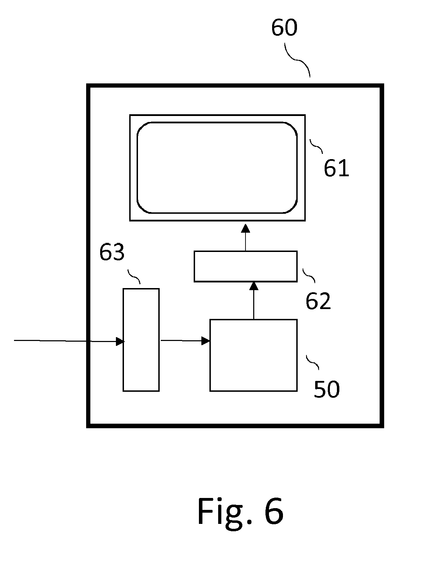

Fig. 6 shows an embodiment of a TV apparatus 60 provided with the image processor 50. The TV apparatus 60 comprises a receiver section 63 for receiving a TV signal and extracting video information in the form of a sequence of pixelized images. The pixelized images are usually more or less degraded. The image processor 50 is coupled to an output of the receiving section and restores the degraded images. The restored images are submitted to a driver circuit 62 for a display 61 for rendering the video information. The driver circuit is controlled by the output of the image processor 50, so as to cause the rendering of the restored image on the display 61.

Although the invention is very suitable to be applied for television it is to be understood that he field of application of the invention is not limited to television. Application of the invention is suitable for all fields where restoration of degraded images has to be performed within a limited time, in particular in application where there is a need to perform the image restoration on line such as for example in cameras, and document scanning systems, smart phones and computer monitors.

Although several embodiments of the present invention have been illustrated in the accompanying drawings and described in the above detailed description, it will be understood that the invention is not limited to the embodiments disclosed, but is capable of numerous modifications without departing from the scope of the invention as set out in the following claims.

**Claims**

1. Method for enhancing a degraded image, said method comprising a training process for determining pixel classes and corresponding filter characteristics on the basis of a plurality of pairs of training image and corresponding degraded training image and an image restoring process for creating a restored image by filtering the degraded image using results of the training process, whereby said training process comprises:

    - deriving (S3) for each of a plurality of individual pixels of the degraded training images a corresponding feature vector, representing local characteristics of the individual pixel, from pixels within an aperture comprising the individual pixel and neighbouring pixels,
    - defining (S4) pixel classes by clustering feature vectors having similar characteristics, for each pixel class a representative feature vector being assigned,
    - determining (S5) for each pixel class filter characteristics of a filter for restoring pixels of the training images when applied to the pixels of the corresponding degraded training image and whereby said image restoring process comprising:
    - determining (S11) feature vectors for a plurality of pixels of the degraded image,
    - determining (S12) for each of the degraded pixels a near matching pixel class, having a representative feature vector which is close to the feature vector determined for the corresponding degraded pixel
    - restoring (S13) pixels of the image by applying filters to the degraded pixels, which filters have the filter characteristics belonging to the near matching pixel classes determined for the degraded pixels.

2.  Method as claimed in claim 1 wherein in the training process filter characteristics are defined by filter coefficients, and wherein in the restoring process a filter is used with adjustable filter coefficients, whereby the filter characteristics are adjusted by setting the filter coefficients to values determined in the training process for the near matching pixel class.

3.  Method as claimed in claim 1 or 2, each of a set of training images have two or more corresponding degraded training images with different degradation levels, whereby in the training process sets of filter coefficients are determined for different degradation levels and whereby in the restoring process a degradation level of the degraded image is determined and the set of filter coefficients for the restoring of the image is selected in dependence on the determined degradation level of the degraded image.

4.  Method as claimed in claim 1, 2 or 3 , wherein in the restoring process for each of the plurality of degraded pixels M nearest matching pixel classes are determined, M being an integer equal or greater than 2, the pixels of the degraded image are filtered with M filters having the sets of coefficients belonging to the determined M nearest matching pixel classes and the restored image is derived from a combination of outputs of the M filters.

5.  Method as claimed in claim 1,2, 3 or 4 wherein the feature vector comprises a component indicating an average of values of a property the pixel in the aperture and a component for each of the pixels in the aperture with a value corresponding to the value of the property of the corresponding pixel minus the average value.

6.  Method as claimed in any of the preceding claims wherein the aperture has a size of nxn pixels, where n is an integer which is equal or greater than 2.

7.  Method as claimed in one of the preceding claims wherein the filters are image sharpening filters.

8.  Training process for determining pixel classes and corresponding filter characteristics on the basis of a plurality of pairs of training image and corresponding degraded training image, said training process comprising:

    - deriving (S3) for each of a plurality of individual pixels of the degraded training images a corresponding feature vector, representing local characteristics of the individual pixel, from pixels within an aperture comprising the individual pixel and neighbouring pixels
    - defining (S4) pixel classes by clustering feature vectors having similar characteristics, for each pixel class a representative feature vector being assigned
    - determining (S5) for each pixel class filter characteristics of a filter for restoring pixels of the training images when applied to the pixels of the corresponding degraded training image.

9.  A program product having program code to perform the training process as claimed in claim 8 when loaded in a programmable device.

10. Image restoring process for creating a restored image by filtering a degraded image, said image restoring process comprising:

    - determining (S11) feature vectors for a plurality of pixels of the degraded image,
    - determining (S12) for each of the degraded pixels a near matching pixel class, having a representative feature vector which is close to the feature vector determined for the corresponding degraded pixel
    - restoring (S13) pixels of the image by applying filters to the degraded pixels, which filters have the filter characteristics belonging to the near matching pixel classes determined for the degraded pixels.

11. A program product having program code to perform the image restoring process as claimed in claim 10 when loaded in a programmable device.

12. An application specific integrated circuit (ASIC) configured to perform the image restoring process as claimed in claim 10.

13. An image processor (50) for deriving a restored image from a degraded image, which processor is arranged to derive a first feature vector from an aperture of a pixel of the degraded image and a plurality of its neighbouring pixels, and to compare the determined feature vector with a set of predefined feature vectors and to apply to the pixel a predefined filter (57) with filter characteristic belonging to a feature vector of the set of predetermined feature

**EP 3 032 493 A1**

vectors which has a near match with the first feature vector.

14. Image processor as claimed in claim 13 wherein the aperture has a size of nxn pixels, where n is an integer which is equal or greater than 2.

15. An image processor as claimed in claim 13 or 14, wherein the filter (57) is adjustable by means of filter coefficients, and the image processor comprises a dictionary (54) of pixel classes comprising for each pixel class one of the predetermined feature vectors and a filter look up table (55) comprising sets of filter coefficients and means for selecting the set of filter coefficients corresponding with the pixel class comprising the predetermined feature vector with the near match with the first feature vector.

16. Image processor as claimed in claim 15, further comprising means (52) for determining a degradation level of the degraded image, and comprising for at least two different degradation levels a different sets of filter coefficients, whereby the selection means are arranged to select the set of filter coefficients in dependence on the determined level of degradation.

17. Image processor as claimed in claim 15 or 16 comprising M restoring filters (57), M being an integer equal or greater than 2, and wherein the processor (50) is arranged to determine for each of the plurality of degraded pixels M nearest matching pixel classes, the means for selecting the filter coefficient are arranged to select M sets of filter coefficients for the M restoring filters, which sets of filter coefficients correspond with the determined M nearest matching pixel classes, and the image processor (50) is arranged to create the restored image as a combination of outputs of the M restoring filters.

18. Image processor as claimed in any of the claims 13, 14 ,15 or 17, wherein the feature vector comprises a component indicating an average value of values of a property the pixel in the aperture and a component for each of the pixels in the aperture with a value corresponding to the value of the property of the corresponding pixel minus the average value.

19. Image processor as claimed in any of the claims 13 to 18, wherein the predefined filters are image sharpening filters.

20. Image rendering apparatus comprising an image processor as claimed in any of the claims 13 to 19 and rendering means for rendering the restored image.

Store collection of training images in database — S1

Create degraded training images and store them in database — S2

Derive feature vectors for pixels of degraded images — S3

Cluster feature vectors and determine pixel classes — S4

Determine optimized restoring filter characteristic for each pixel class — S5

Save dictionary of pixel classes and corresponding filter characteristics — S6

# Fig. 1

## Fig. 2a

Fig. 2b

# Fig. 3

```
┌─────────────────────────────┐
│   Analyze the global sharpness │  ⌐ S10
└─────────────────────────────┘
              │
              ▼
            ( ○ )
              │
              ▼
┌─────────────────────────────┐
│  Determine  feature         │
│  vector for pixel in        │  ⌐ S11
│  process                    │
└─────────────────────────────┘
              │
              ▼
┌─────────────────────────────┐
│  Determine  nearest pixel   │
│  class                      │  ⌐ S12
└─────────────────────────────┘
              │
              ▼
┌─────────────────────────────┐
│  Set filter with the coefficients │
│  associated  with determined │  ⌐ S13
│  pixel class                │
└─────────────────────────────┘
              │
              ▼
┌─────────────────────────────┐
│  Output restored pixel      │  ⌐ S14
└─────────────────────────────┘
```

Fig. 4

Fig. 5

60

61

63

62

50

Fig. 6

Europäisches
Patentamt

European
Patent Office

Office européen
des brevets

## EUROPEAN SEARCH REPORT

Application Number

EP 14 19 7321

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 00/48117 A1 (SONY ELECTRONICS INC [US]) 17 August 2000 (2000-08-17) <br> * page 5, lines 24-29 * <br> * page 6, lines 4,5 * <br> * page 6, lines 20-25 * <br> * page 7, line 11 - page 10, line 7 * <br> * page 11, lines 15-18 * <br> * page 15, lines 6-12 * <br> * figures 2a-2d,3,18,19 * <br> * claims 36-70 * <br> ----- | 1-20 | INV. <br> G06T5/00 <br> G06T5/20 |
| A | US 2014/321738 A1 (SHIBATA TAKASHI [JP] ET AL) 30 October 2014 (2014-10-30) <br> * the whole document * <br> ----- | 1-20 | |
| A | US 2012/045095 A1 (TATE SHUNTA [JP] ET AL) 23 February 2012 (2012-02-23) <br> * the whole document * <br> ----- | 1-20 | |

| | TECHNICAL FIELDS SEARCHED (IPC) |
|---|---|
| | G06T |

The present search report has been drawn up for all claims

| Place of search | Date of completion of the search | Examiner |
|---|---|---|
| Munich | 26 January 2015 | Tillier, Christophe |

EPO FORM 1503 03.82 (P04C01)

## ANNEX TO THE EUROPEAN SEARCH REPORT
## ON EUROPEAN PATENT APPLICATION NO.

EP 14 19 7321

This annex lists the patent family members relating to the patent documents cited in the above-mentioned European search report.
The members are as contained in the European Patent Office EDP file on
The European Patent Office is in no way liable for these particulars which are merely given for the purpose of information.

26-01-2015

| Patent document cited in search report | | Publication date | Patent family member(s) | | Publication date |
|---|---|---|---|---|---|
| WO 0048117 | A1 | 17-08-2000 | AU | 2991800 A | 29-08-2000 |
| | | | US | 6192161 B1 | 20-02-2001 |
| | | | WO | 0048117 A1 | 17-08-2000 |
| US 2014321738 | A1 | 30-10-2014 | US | 2014321738 A1 | 30-10-2014 |
| | | | WO | 2013089265 A1 | 20-06-2013 |
| US 2012045095 | A1 | 23-02-2012 | JP | 2012043151 A | 01-03-2012 |
| | | | US | 2012045095 A1 | 23-02-2012 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 6192161 B

### Non-patent literature cited in the description

- **J.R. PRICE ; T.F. GEE ; K.W. TOBIN.** Blur estimation in limited-control environments. *IEEE International Conference on Acoustics, Speech, and Signal Processing,* 2001, vol. 3, 1669-1672

- K-means++: The advantages of careful seeding. **DAVID ARTHUR ; SERGEI VASSILVITSKII.** Proceedings of the Eighteenth Annual ACM-SIAM Symposium on Discrete Algorithms. Society for Industrial and Applied Mathematics, 2007, 1027-1035